# EUROPEAN PATENT APPLICATION

(11) **EP 1 748 631 A1**
(43) Date of publication of application: **31.01.2007**
(21) Application number: 05106957.3
(22) Date of filing: 28.07.2005
(51) Int. Cl.: H04M 1/60

(54) **Movement-based mode switching of a handheld device**

(71) Applicant: Research In Motion Limited, Waterloo, Ontario N2L 3W8 (CA)
(72) Inventor: Orr, Kevin, Elmira Ontario N3B 3C9 (CA)
(74) Representative: Rickard, David John

(57) **Abstract**

A handheld device (10) that intuitively switches operating modes based upon the device position. Each operating mode is associated with a particular device position. If the device (10) recognizes a change in its physical orientation it may trigger a change in its operating mode to correspond to the new orientation. The operating modes may be a speakerphone mode and handset mode associated with a voice call. The device (10) may enter speakerphone mode when held substantially flat and may switch to handset mode when the device (10) is lifted up and tilted to the user's ear. An orientation sensor (64) contained within the device (10) may provide the orientation data based upon which the device (10) selects its operating mode.

## Description

The present application relates to handheld devices and, in particular, to methods and systems for switching the operating mode of the handheld device in response to movement of the device.

Handheld devices, such as cellular telephones, cordless telephones, personal digital assistants, wireless data devices, etc., often have applications that are capable of executing in more than one mode of operation. For example, a voice communication application for engaging in a voice call with a remote party may operate in a handset mode or a speakerphone mode. The "handset mode" enables private communications whereby the user of the device holds the device to his or her ear, preventing others in the area from hearing the incoming audio. The "speakerphone mode" broadcasts the incoming audio to the surrounding area and enables others in the area to contribute to the call by receiving audio input from the surrounding area for transmission to the remote party.

To establish an operating mode or to switch between operating modes, like handset and speakerphone modes, a user typically must perform some manual operation like pressing a button or selecting an item on a display.

It may be advantageous to provide another method of switching operating modes on a handheld device.

The present application provides a handheld device that intuitively switches between operating modes based upon the device orientation. Each operating mode is associated with a particular device position, and as the device changes orientation it determines whether the orientation is associated with a different operating mode. If the device recognizes a change in orientation it may trigger a change in operating mode to correspond to the new position of the device.

In one aspect, the present application provides a handheld device for engaging in wireless communications and having at least two operating modes. The device includes a device body and an orientation sensor fixedly mounted within the device body and outputting an orientation signal. The orientation signal provides information regarding the physical orientation of the device body. The device also includes a processor having an input for receiving and processing the orientation signal and a position detection module for switching the device from a first operating mode to a second operating mode based upon the orientation signal.

In another aspect the present application provides a method of changing operating mode for a handheld device. The method includes steps of operating the device for wireless communication in a first operating mode, sensing a physical orientation of the device, switching the device to a second operating mode in response to the physical orientation.

In yet a further aspect, the present application provides a handheld device for engaging in wireless communications and having a voice communication application capable of operating in a speakerphone mode or a handset mode. The device includes a device body and an accelerometer fixed in position within the device body and outputting at least two orientation signals. The orientation signals provide data regarding accelerative forces sensed along at least two respective axes. The device also includes a processor having an input for receiving and processing the orientation signals, and a position detection module for determining whether the device is oriented in a first position or a second position based upon the orientation signals. The position detection module triggers the device to enter speakerphone mode when oriented in the first position and handset mode when oriented in the second position.

Other aspects and features of the present application will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present application, and in which:

Figure 1 shows a block diagram of an example embodiment of a handheld device;

Figures 2 to 4 diagrammatically show the handheld device 10 in various physical orientations;

Figure 5 shows, in flowchart form, a method of determining operating mode based upon orientation of a handheld device;

Figure 6 shows a graph of an *x*-axis accelerometer signal for indicating movement of the handheld device;

Figure 7 shows a graph of a *y*-axis accelerometer signal for indicating movement of the handheld device;

Figure 8 shows a graph of a *z*-axis accelerometer signal for indicating movement of the handheld device; and

Figure 9 shows a composite graph of all three of the accelerometer signals from Figure 6 through 8.

Similar reference numerals are used in different figures to denote similar components.

### DESCRIPTION OF PREFERRED EMBODIMENTS

The following description of one or more specific embodiments does not limit the implementation to any particular computer programming language or system architecture. The present application is not limited to any particular operating system, mobile device architecture, or computer programming language.

References herein to an "orientation sensor" or "orientation device" and the like are intended to refer to devices capable of sensing forces related to orientation, such as static and/or dynamic acceleration. Orientation sensors in some embodiments may include gyroscopes, accelerometers, tilt-sensors (like mercury switches), and other such devices.

References herein to a "handset" position or mode correspond to use of a device in a position whereby the user holds the device such that its face is proximate his or her ear at the side of the head, as with a customary telephone handset. References to a "speakerphone" position or mode correspond to use of a device in a position whereby the face of the device is roughly parallel to the ground and facing upwards, *i.e.* the device is flat on its back. These two described positions or modes are understood to correspond to one or more embodiments described below. It will be appreciated that other embodiments may include additional or different positions or modes.

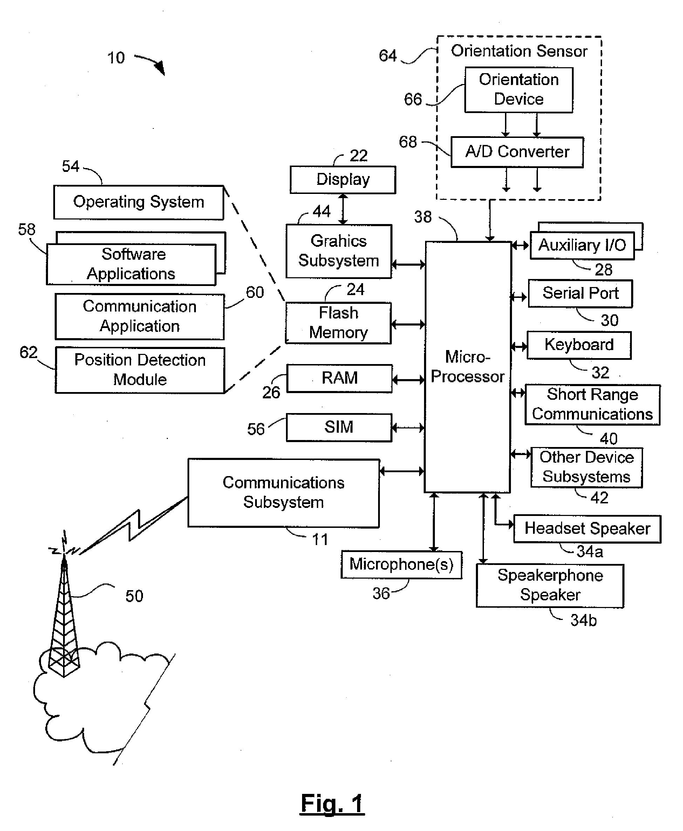

Referring now to the drawings, Figure 1 is a block diagram of an example embodiment of a handheld device 10. In the example embodiment, the handheld device is a two-way handheld communication device having data and voice communication capabilities. In an example embodiment, the handheld device 10 has the capability to communicate with other computer systems on the Internet. Depending on the functionality provided by the device 10, in various embodiments the device 10 may be a data communication device, a multiple-mode communication device configured for both data and voice communication, a mobile telephone, a PDA enabled for wireless communication, or a short-range portable telephone handset, among other things.

In this embodiment, the device 10 includes a communication subsystem 11. In one embodiment, the communication subsystem 11 may include a receiver, a transmitter, and associated components such as one or more, preferably embedded or internal, antenna elements, and a processing module such as a digital signal processor (DSP). As will be apparent to those skilled in the field of communications, the particular design of the communication subsystem 11 will be dependent upon the communication network in which the device 10 is intended to operate.

Signals may be received by the device 10 from a wireless network 50. The signals are input to the receiver of the communication subsystem 11, which may perform such common receiver functions as signal amplification, frequency down conversion, filtering, channel selection and the like. In a similar manner, signals to be transmitted are processed, including modulation and encoding for example, by the DSP and input to the transmitter for digital to analog conversion, frequency up conversion, filtering, amplification and transmission over the wireless network 50. In the case of a portable telephone handset, signals are received by the basestation, which itself may be connected to the public switched telephone network (PSTN).

The device 10 includes a microprocessor 38 that controls the overall operation of the device. The microprocessor 38 interacts with the communications subsystem 11 and also interacts with further device subsystems such as a graphics subsystem 44, flash memory 24, random access memory (RAM) 26, auxiliary input/output (I/O) subsystems 28, serial port 30, keyboard or keypad 32, speaker(s) 34, microphone(s) 36, a short-range communications subsystem 40, and any other device subsystems generally designated as 42. The graphics subsystem 44 interacts with the display 22 and renders graphics or text upon the display 22.

The speaker(s) 34 may include a handset speaker 34a and a speakerphone speaker 34b. The handset speaker 34a is designed for use in the manner of typical telephone handset, wherein the device 10 is held to the side of the user's head and the handset speaker 34a is placed proximate the user's ear and the microphone 36 is placed proximate the user's mouth. The speakerphone speaker 34b is designed for use in a speakerphone mode, wherein the device 10 is held distant from the user's head and the speakerphone speaker 34b broadcasts the output audio to the general vicinity surrounding the device 10. The speakerphone mode of operation allows two or more persons to listen to and participate in the conversation with the user(s) on the call.

It will be appreciated that, in some embodiments, the device 10 may have one speaker 34 which is used for both handset mode and speakerphone mode, albeit with different audio gain applied to the output audio signals for the two modes. Similarly, the device 10 may include a handset microphone and a separate speakerphone microphone; or, it may have a single microphone for use in both modes of operation.

Operating system software 54 and various software applications 58 used by the microprocessor 38 are, in one example embodiment, stored in a persistent store such as flash memory 24 or similar storage element. Those skilled in the art will appreciate that the operating system 54, software applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of software applications which control basic device operations, including data and voice communication applications for example, may normally be installed on the device 10 during manufacture. Further software applications 58 may also be loaded onto the device 10 through the wireless network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both.

In a data communication mode, a received signal such as a text message or web page download will be processed by the communication subsystem 11 and input to the microprocessor 38, which will preferably further process the received signal for output to the display 22 through the graphics subsystem 44, or alternatively to an auxiliary I/O device 28. A user of device 10 may also compose data items within a software application 58, such as email messages for example, using the keyboard 32 in conjunction with the display 22 and possibly an auxiliary I/O device 28 such as, for example, a thumbwheel. Such composed items may then be transmitted over a communication network through the communication subsystem 11.

The serial port 30 in Figure 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices. The device 10 may be a handheld device.

Wireless network 50 is, in an example embodiment a voice and data network such as GSM (Global System for Mobile Communication), GPRS (General Packet Radio System), CDMA (Code Division Multiple Access), or various other third generation networks such as EDGE (Enhanced Data rates for GSM Evolution) or UMTS (Universal Mobile Telecommunications Systems).

The handheld device 10 includes a communication application 60 which provides voice communication functionality. For example, the communication application 60 may provide the ability to initiate or terminate telephone calls, such as cellular telephone calls, VolP calls, etc. Although the communication application 60 is shown as being separate from the operating system 54, in some embodiments it may be provided as a part of the operating system 54 of the device 10.

The handheld device 10 is capable of operating the communication application 60 in at least two modes: handset mode and speakerphone mode. In handset mode, the audio gain and signal routing are configured for use of the device 10 in a "handset" position, *i.e.* against the side of the user's head. This may include routing audio signals to the handset speaker 34a, and receiving incoming audio signals from a handset microphone 36. In the speakerphone mode, the audio gain and signal routing are configured for use of the device 10 in a "speakerphone" position, *i.e.* distant from the user's head. This may include routing audio signal to the speakerphone speaker 34b, and receiving incoming audio signals from the speakerphone microphone 36. In some embodiments, these two modes may use the same microphone and/or speaker, but different audio gain.

It will be appreciated that the current operating mode, e.g. handset mode or speakerphone mode, may be governed at the level of the communication application 60 or at the operating system 54 level, or a combination thereof. For example, the operating mode may be implemented and controlled at the level of the operating system 54, but the communication application 60 may remain aware of the current mode and may have the ability to send messages or instructions to the operating system 54 in order to select a desired operating mode.

The operating modes of the handheld device 10 may be associated with a physical orientation or position of the handheld device 10. This association may be based upon a natural positioning of the device 10 that corresponds to use in the particular operating mode. In other embodiments, the association may be created for other reasons and may be taught to users.

In the example embodiments discussed herein, the handset speaker 34a, the handset microphone 36, and the speakerphone microphone 36 are all located on a front face of the device 10. This configuration permits the device 10 to be used in a "handset" position, as described above, and held face up for use in a speakerphone position. In other embodiments, one or more microphones and/or speakers may be disposed in other locations on the device 10. The precise configuration may affect the natural positioning of the device 10 when used in different modes. For example, the speakerphone speaker 36 in one embodiment may be located on the back of the device 10, such that the device 10 is held face down parallel to the ground to expose the speakerphone speaker 36 when used in a speakerphone mode. Other variations are also possible.

In one example embodiment, the operating modes include the handset mode and the speakerphone mode. When operating the handheld device 10 in the handset mode, the device 10 is typically held on its side - *i.e.* with its front face perpendicular to ground - such that the front face is positioned against the side of the user's head. When operating the device 10 in speakerphone mode, the device 10 may be laid flat upon a table or other surface, or may be held flat in the palm of the user's hand with its display facing upwards towards the user. Other physical associations may exist between device operating modes and device positioning.

The association between device position/orientation and device operating mode allows for inferences to be drawn regarding the desired operating mode based upon the device position. For example, if a device is substantially flat with its display facing upwards and a telephone call is initiated or received, one may infer that a speakerphone mode is desired by the user. Conversely, if the device is tilted onto its side with its front face perpendicular to ground during a telephone call, one may infer that a handset mode is desired by the user. Accordingly, the handheld device 10 switches between operating modes based upon its detected physical orientation or changes in physical orientation.

The handheld device 10 includes an orientation sensor 64 connected to the microprocessor 38. The orientation sensor 64 provides the microprocessor 38 with a digital signal having information regarding the physical orientation of the handheld device 10. The orientation sensor 64 is fixed in position within the handheld device 10 such that it may sense changes in the physical orientation of the handheld device 10 relative to a fixed gravitational field. In one embodiment, it is mounted to a printed circuit board within the handheld device 10.

The orientation sensor 64 may include an orientation device 66 and an analog-to-digital (A/D) converter 68. In some embodiments, the orientation sensor device 66 may comprise an accelerometer. In some other embodiments, the orientation device 66 may include a tilt sensor, such as a mercury switch, or a gyroscope. The accelerometer may include a microelectomechanical system (MEMS), such as a capacitive accelerometer. Other MEMS accelerometers, including piezoresistive and gas-based accelerometers, may be used. By way of example, in one embodiment the accelerometer may be a LIS3L02AQ tri-axis analog accelerometer from STMicroelectronics of Geneva, Switzerland. In some embodiments, the sensor device 66 and A/D converter 68 may be incorporated into a single integrated device, for example the LIS3L02DQ tri-axis accelerometer with I²C or SPI interface from STMicroelectronics.

The orientation sensor 64 may also include various filters, signal conditioners, etc., for conditioning the output signals from the sensor device 66, as will be appreciated by those of ordinary skill in the art.

The sensor device 66 produces one or more output signals that indicate physical orientation of the handheld device 10. For example, a dual axis accelerometer may output an x-axis signal and a y-axis signal. A tri-axis device outputs signals for orthogonal x-, y-, and z-axes. The output signals may be analog voltages proportional to accelerative force in the axis direction. For example, the ADXL203 device from Analog Devices, Inc., outputs a voltage that corresponds to a range of positive and negative linear accelerations of ±1.7g*.* Static acceleration forces may be measured by such devices, thereby allowing them to provide information regarding tilt relative to gravity (i.e. to act as a tilt sensor).

The handheld device 10 also includes a position detection module 62. The position detection module 62 determines the physical orientation of the handheld device 10 based upon the orientation information provided by the orientation sensor 64. In particular, the position detection module 62 may look for particular indicia of orientation that are associated with one or more positions. For example, the position detection module 62 may read the orientation information and determine whether the handheld device 10 is in a predetermined position by assessing whether one or more of the orientation signals relating to linear acceleration along an axis meet a threshold or fall within a range. The position detection module 62 may be configured so as to detect or distinguish between two positions that are each associated with a particular operating mode. Accordingly, the position detection module 62 may analyze the orientation information with a view to determining if the handheld device 10 has moved from one of the positions to the other position. For example, one of the positions may be associated with a certain range of gravitational forces along certain axes, and the other position may be associated with a distinctive range of gravitational forces along those axes. By determining the gravitational force along the axes based upon the orientation signals from the orientation sensor 64, the position detection module 62 may determine if the device 10 is oriented in the first position or the second position.

The position detection module 62 may output a signal, instruction, or other communication to control the operating mode of the device based upon the position of the handheld device 10. The signal, instruction, or other communication may be to the communication application 60 and/or the operating system 54. In an embodiment wherein the handheld device 10 has two operating modes, the position detection module 10 may cause the device 10 to switch between the two modes based upon the physical position of the device 10.

Figure 1 depicts the position detection module 62 as being distinct from the communication application 60; however, it will be appreciated that the position detection module 62 may be a part of the communication application 62. In another embodiment, the position detection module 62 may be part of the operating system 54.

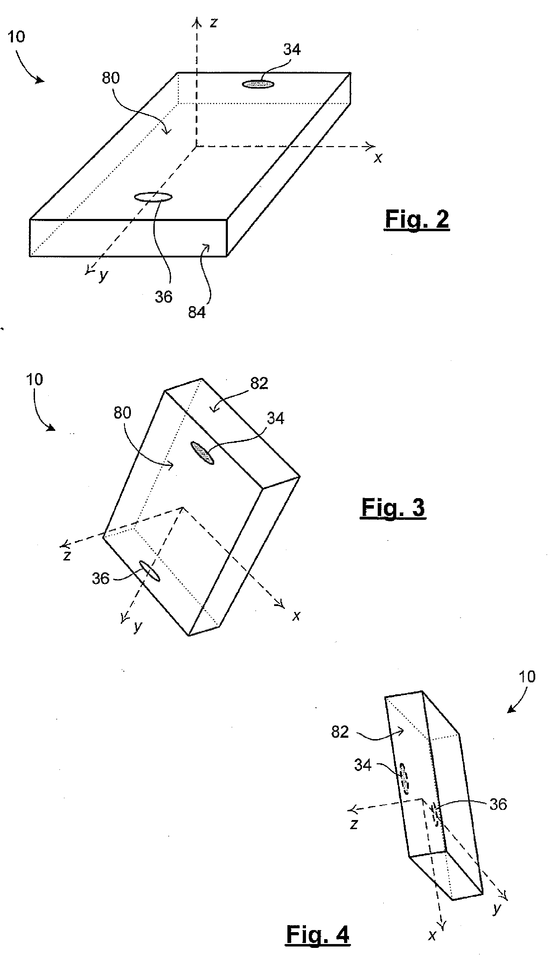

Reference is now made to Figures 2-4, which diagrammatically show the handheld device 10 in various physical orientations. The handheld device 10 includes a top end 82, a bottom end 84, and a front face 80. The front face 80 provides apertures for showing the display (not illustrated), outputting audio from the handset speaker 34, and inputting audio to the microphone 36. In some embodiments, the microphone 36 may be located in the bottom end 84 or elsewhere near the bottom of the handheld device 10. As discussed above, the device 10 may also include a separate speakerphone speaker (not illustrated) for use in speakerphone mode.

Three axes of orientation are shown in the Figures. The *x*-axis extends to the right of the device 10 when the device 10 is viewed from the front. The *y*-axis extends downwards through the bottom end 84 of the device 10. The *z*-axis extends upwards normal to the front face 80 of the device 10.

Figure 2 shows the device 10 in a substantially flat position. This position corresponds to the device 10 being held in the user's hand while the user views the display or inputs information, such as a phone number. In some embodiments, this may be considered a start or default position, since it is the position associated with initiating a phone call or answering a phone call. This may also be the position associated with a speakerphone mode of operation.

In the flat or face-up position, the static acceleration (*i.e.* gravitational forces) applied to the device 10 includes near zero acceleration in the *x* and *y* directions and approximately negative 1*g* acceleration in the z direction.

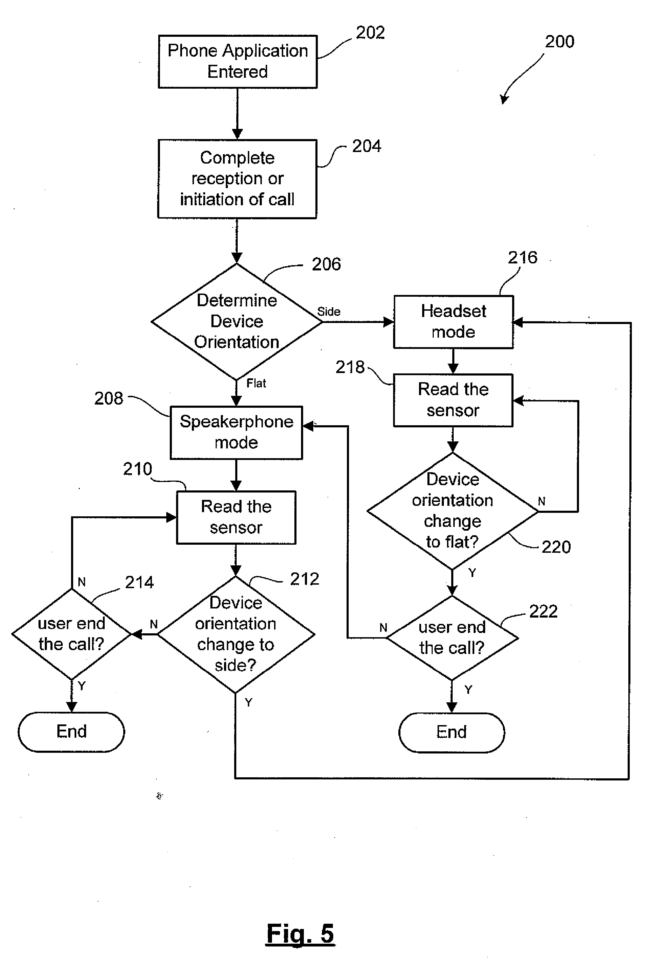

Figure 4 shows the device 10 when picked up by the user and placed against the user's ear for use in a handset mode. As illustrated, the device 10 is held in the user's right hand and is held against the user's right ear. Figure 3 shows the device 10 in an intermediate position as it is being lifted from a flat or face-up position of Figure 2 to the handset position of Figure 4.

In Figure 3, it will be noted that the device 10 has been tilted upwards, such that the top end 82 of the device 10 is now at a higher elevation than the bottom end 84. The device 10 is also partly inclined to the right-hand side, as the user pivots the device 10. In Figure 4, the device 10 is substantially on its side, with the top end 82, bottom end 84 and front face 80 all nearly vertical, the top end 82 being slightly more elevated than the bottom end 84.

In the progression of movement between Figure 2, Figure 3 and Figure 4, the *z*-axis goes from substantially vertical to substantially horizontal. Conversely, the *x*-axis goes from being substantially horizontal to somewhat vertical. The *y-*axis starts substantially horizontal and is brought nearly vertical as the device is pivoted upwards. The *y*-axis illustrated in Figure 4 is shown to be substantially horizontal again.

In the embodiment illustrated in Figure 4, the handheld device 10 is shown to be held against the user's ear in an orientation wherein the *x*-axis is nearly vertical and the *y*-axis is nearly horizontal; however, it will be appreciated that different persons will hold the handheld device 10 against their heads in a position that will range from such an orientation to an orientation wherein the *y*-axis is nearly vertical and the *x*-axis is nearly horizontal. For example, the person's head may be tilted slightly forward, such that his or her ear is located above his or her mouth, meaning that the handheld device 10 is positioned with the bottom end 84 down and the top end 82 up. In a typical situation, the handheld device 10 may be held at an angle, such that both the *x*-axis and the *y*-axis are angled between horizontal and vertical.

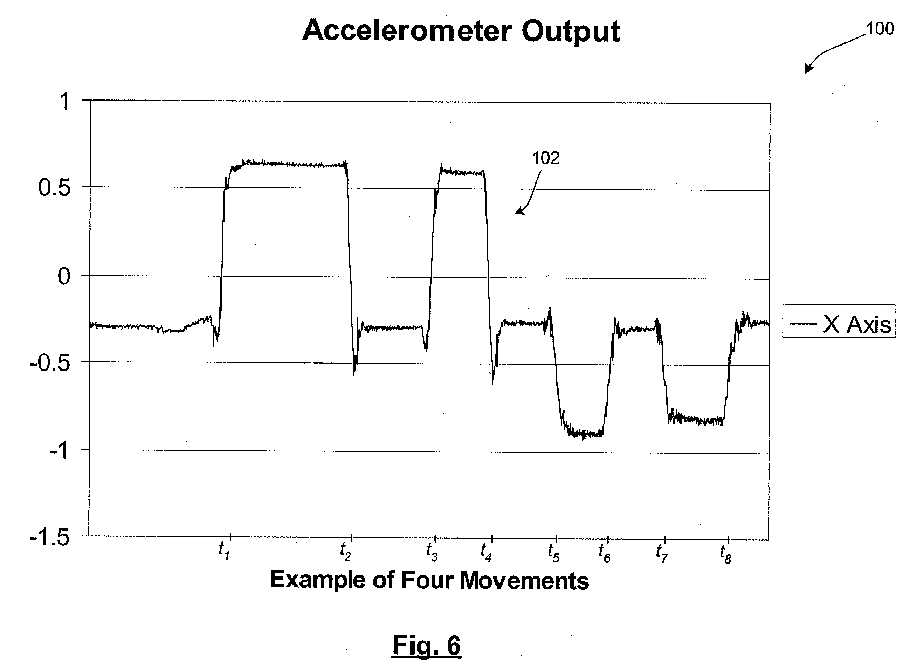

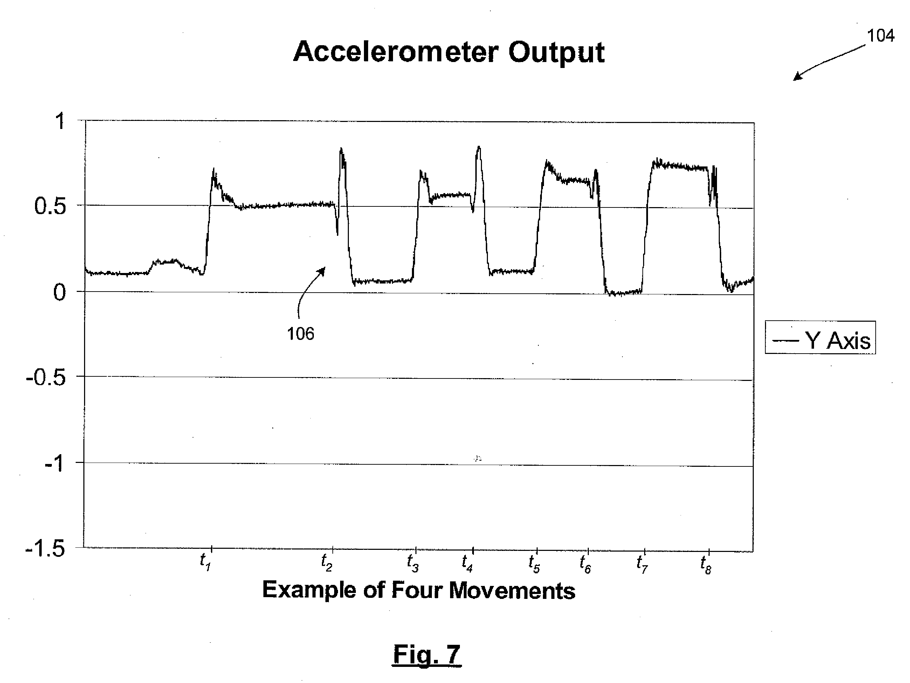

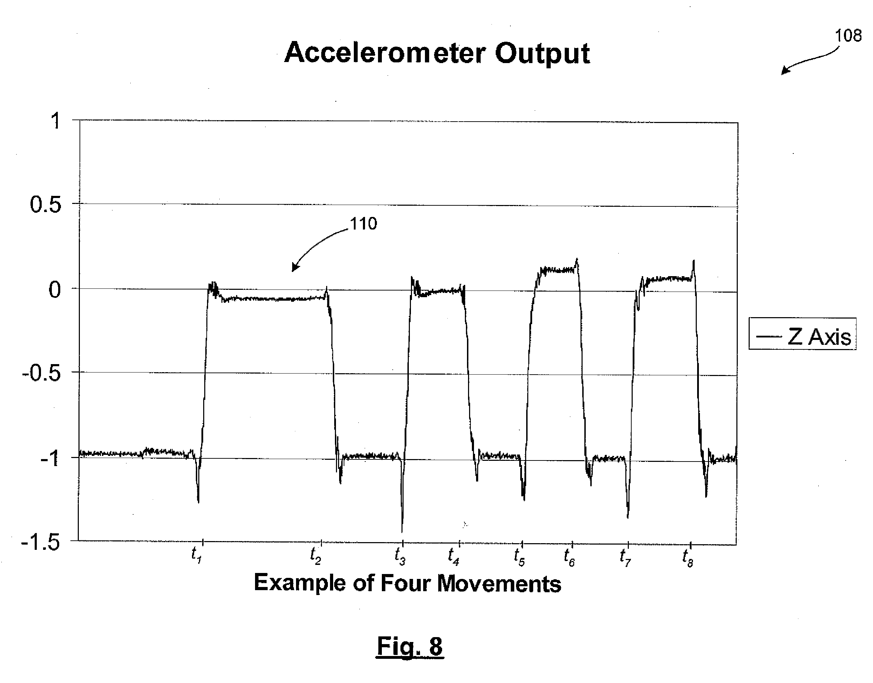

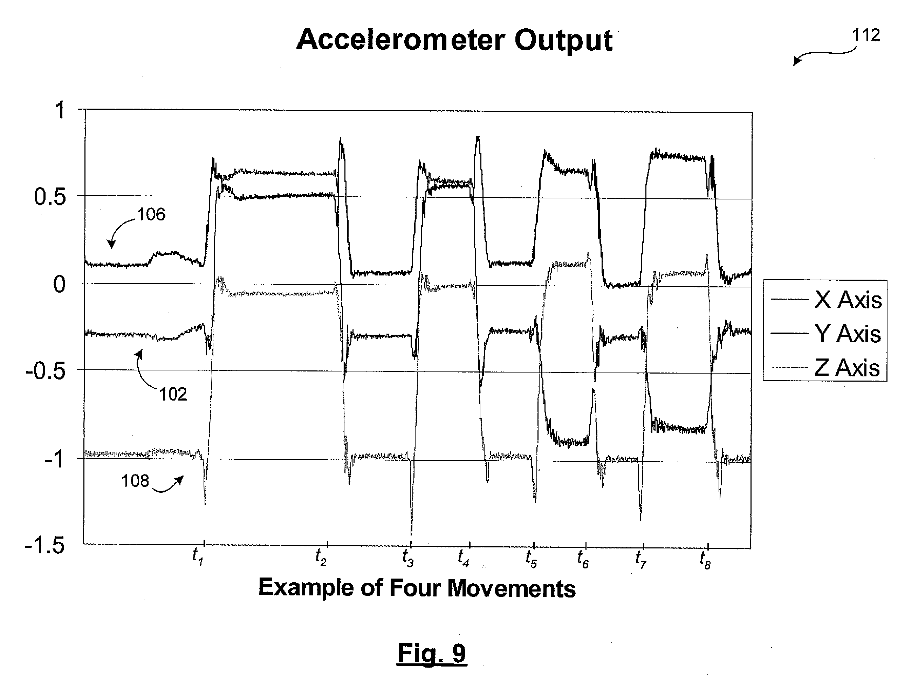

Reference is now made to Figures 6 through 9, which show various graphs of output data from a tri-axis accelerometer in the handheld device 10 of Figure 2 through 4. Figure 6 shows a graph 100 of an *x*-axis accelerometer signal 102. Figure 7 shows a graph 104 of a *y*-axis accelerometer signal 106. Figure 8 shows a graph 108 of a *z*-axis accelerometer signal 110. Figure 9 shows a graph 112 of all three of the accelerometer signals 102, 106, 110. The divisions on the vertical scale of the graphs are gravitational units, g. The graph data is based upon an example embodiment of the handheld device 10 wherein the accelerometer device is mounted to the bottom side of a printed circuit board in the device 10; in other words, the *z*-axis is pointed downwards, giving a reading of -1*g* when the device 10 is flat.

The signals 102, 106, 110 reflect the effect of changes in the physical orientation of the handheld device. In particular, four movement events are illustrated. The first two movements are from flat/face-up to right-hand handset position and back. The second two movements are from flat/face-up to left-hand handset position and back.

Referring first to Figure 6, the *x*-axis accelerometer signal 102 initially shows an x-direction force of approximately -0.3g. When the device is held in the user's hand, the x-direction gravitational force is expected to be approximately zero, but may range between -0.5 g and +0.5g as the device is tilted slightly to one side or the other in the user's hand. When the device is brought up to the user's right ear in a handset position at time *t₁,* or at time *t₃,* the *x*-axis accelerometer signal 102 begins to read a positive x-direction gravitational force of >0.5 g. This is indicative of the device being positioned substantially on its side with the *x*-axis directed downwards. The *x*-axis accelerometer signal 102 specifically shows a value of approximately +0.7g. At times *t₂* or *t₄,* the device is returned to the face-up or speakerphone position, and the *x*-axis accelerometer signal 102 returns to approximately -0.3g.

The second two movements are illustrated at times *t₅* to *t₈.* The device is brought from a face-up or speakerphone position to a left ear handset position. When the device is brought to the left ear, it is tilted onto an opposite side from the situation with the right ear. When positioned at the left ear, the *x*-axis points substantially upwards away from the ground. Accordingly, at time *t₅* or *t₇* the *x-*axis accelerometer signal 102 indicates an x-direction gravitational force of approximately -0.9g. At times *t₆* and *t₈,* the *x*-axis accelerometer signal 102 returns to approximately -0.3g.

Referring now to Figure 7, it will be seen that all four movements produce a similar response in the *y*-axis accelerometer signal 106. In the substantially flat speakerphone position, the *y*-axis accelerometer signal 106 reads approximately 0*g.* When the device is brought up to a handset position (either right or left) at times *t₁, t₃, t₅* or *t₇,* the *y*-axis accelerometer signal 106 shows an increase in the gravitational force sensed in the y-axis direction. Specifically, the *y*-axis accelerometer signal 106 shows a value of between +0.5g and +0.8g, indicating that the y-axis is tilted substantially towards the ground. The *y*-axis accelerometer signal 106 also shows that a peak force may occur during the transition between orientations. As illustrated above in connection with Figures 2-4, the y-axis may be rotated from a substantially horizontal position, through a substantially vertical positions and part way into a further substantially horizontal position when the device is brought into the handset position. This accounts for the peak shown during transitions as the y-axis is brought into a near vertical orientation, thereby increasing the sensed gravitational force.

Reference is now made to Figure 8. The *z*-axis accelerometer signal 110 indicates an initial substantially flat - i.e. speakerphone - position through its -1*g* value. This value is indicative of a substantially vertical *z*-axis. As the device is brought up to handset position, the *z*-axis accelerometer signal 110 changes to near zero as the device is tilted onto its side with the front face nearly vertical. During the transition to handset mode, the *z*-axis accelerometer shows a downwards spike. This indicates the additional force sensed as the user quickly raises the device upwards.

Figure 9 shows all three signals 102, 106, and 110 together on the same graph 112.

Reference is now made to Figure 5, which shows, in flowchart form, a method 200 of determining operating mode based upon orientation of a handheld device. The method 200 relates to an example embodiment wherein the handheld device features two operating modes for use in connection with a voice communication application: handset mode and speakerphone mode.

The method 200 begins in step 202 with the launch of the voice communication application. This may include awakening a voice communication application from a "sleep" or background mode. The launch of the application may be triggered by the user because the user wishes to initiate a voice call. This may include powering on the device, selecting a voice call icon, beginning the dialing of a phone number, or any other number of possible trigger events. The launch of the application may further be triggered by reception of a call. A voice call may be received by way of a signal from the wireless basestation or the cordless basestation indicating an incoming call, whereupon the application will emit vibrations, ring tones, etc., to alert the user to the incoming call.

In step 204, the user completes initiation or reception of the call. For example, the user may answer the incoming call by pressing a designated button. The user may initiate the outgoing call with the press of a "send" button. In both these circumstances, the user typically holds the device face-up, *i.e.* flat in the hand, in order to see the display and press appropriate buttons. Accordingly, the device may be assumed to be in a "speakerphone" orientation initially. This assumption may be confirmed by the position detection module by reading the data from the *z*-axis and confirming that the data shows a negative value of approximately -1*g.* In one embodiment, the device may confirm a speakerphone orientation on the basis of a *z*-axis reading of -0.5*g* to negative maximum.

In step 206, the device orientation sensor is monitored from the activation of the call in step 204 to determine whether the handheld changes physical orientation. In particular, the data from the orientation sensor is monitored to determine whether it indicates that the handheld device has been brought up to the user's ear or whether it remains flat. Constant monitoring of the sensor output may prove too processor intensive in some applications, so only periodic monitoring/reading of the sensor data may be employed. An assessment of the position of the device may be made within a half second or so of initiation of the call in step 204 so that the device is placed in the appropriate mode within a reasonable time before the parties to the call begin speaking.

If the orientation sensor indicates that the device remains substantially flat, then the device is placed in a speakerphone mode in step 208. If the orientation sensor indicates that the device has been tilted onto its side, such that the front face is perpendicular to the ground, then the device is placed in a handset mode in step 216. In either mode, the orientation sensor data is read periodically in steps 210 and 218, respectively. The position detection module assesses the meaning of the data in steps 212 and 220, respectively.

In step 212, if the position detection module determines that the device remains substantially flat, then it returns to step 210 to continue periodically monitoring the sensor for changes in orientation. If it finds that the device has been tilted on its side, then the method 200 proceeds to step 216, whereupon the device is put in the handset mode.

In step 220, if the position detection module determines that the device remains on its side, then it returns to step 218 to continue periodically monitoring the sensor for changes in orientation. If it finds that the device has been brought into a substantially flat orientation, then the method 200 proceeds to step 208, whereby the device is put into the speakerphone mode.

If the user ends the call, as detected in steps 214 and 222, then the method 200 exits.

Those of ordinary skill in the art will appreciate that in some embodiments the orientation sensor may be configured to send an interrupt signal upon detection of a threshold value on one or more axes. Accordingly, in some embodiments steps 210 and/or 218 may amount to waiting for an interrupt signal from the sensor.

It will also be appreciated that, in one embodiment, the method 200 may be implemented with a single axis device sensing x-axis, *y*-axis or *z*-axis linear acceleration. In another embodiment, a dual-axis device or tri-axis device may be used. For example, a dual-axis device may be fixed within the body of the device so as to sense *z*-axis and either of x-axis or *y*-axis tilt. In such an embodiment, an accelerometer may be mounted on its side within the device. The position detection module 62 (Fig. 1) may analyze data from the device to determine whether the device is lying flat or tilted on its side. Appropriate thresholds, ranges, or logical rules for determining the orientation of the device may be used, as will be appreciated by those or ordinary skill in the art having regarding to the description herein.

In one embodiment, the position detection module 62 may be configured to detect a pre-defined gesture or pattern of movement in order to trigger a switch between operating modes. Those of ordinary skill in the art will appreciate that there are a range of algorithms available for pattern and gesture recognition. For example, aspects of gesture recognition are described in Hong, et al., "Gesture Modeling and Recognition Using Finite State Machines", *Proc. IEEE International Conference on Face and Gesture Recognition,* Grenoble, France, March 2000, the contents of which are hereby incorporated by reference. It will further be appreciated that many such techniques may require off-line data analysis to provide for a final algorithm solution to embed within the device.

The present application may be embodied in other specific forms without departing from the spirit or essential characteristics thereof. Certain adaptations and modifications of the application will be obvious to those skilled in the art. Therefore, the above discussed embodiments are considered to be illustrative and not restrictive, the scope of the application being indicated by the appended claims rather than the foregoing description, and all changes which come within the meaning and range of equivalency of the claims are therefore intended to be embraced therein.

## Claims

1. A handheld device (10) for engaging in wireless communications and having at least two operating modes, the device including a device body and a processor (38) and being **characterised in that** it comprises:
an orientation sensor (64) fixedly mounted within said device body and outputting an orientation signal, said orientation signal providing information regarding the physical orientation of said device body; and
a position detection module (62) for switching the device from a first operating mode to a second operating mode based upon said orientation signal.

2. The device claimed in claim 1, **characterised in that** said position detection module (62) determines if said orientation signal indicates a change in the physical orientation of said device body, and switches to said second operating mode based upon said change.

3. The device claimed in claim 2, **characterised in that** said change includes a change from a first position associated with said first operating mode to a second position associated with said second operating mode.

4. The device claimed in claim 3, **characterised in that** said device body includes a front face (80) and wherein said first position includes an orientation wherein said front face (80) is generally parallel relative to the ground, and wherein said second position includes an orientation wherein said front face (80) is generally perpendicular relative to the ground.

5. The device claimed in any one of claims 1 to 4, **characterised in that** said orientation sensor (64) comprises an orientation device (66) comprising any one or a combination of an accelerometer, a gyroscope, and/or a tilt sensor.

6. The device claimed in any one of claims 1 to 5, **characterised in that** said device (10) further includes a voice communication application (60) and wherein said first operating mode comprises a speakerphone mode and said second operating mode comprises a handset mode.

7. The device claimed in claim 6 when dependent on claim 4, **characterised in that** said speakerphone mode is associated with said first position in which said front face (80) is generally parallel relative to the ground, and wherein said handset mode is associated with said second position in which said front face (80) is generally perpendicular to the ground.

8. The device claimed in any one of claims 1 to 7, **characterised in that** said orientation sensor (64) comprises a linear accelerometer sensing acceleration along at least two axes, and wherein said position detection module (62) detects a change in orientation based upon the forces of acceleration sensed along said at least two axes.

9. The device claimed in claim 8, **characterised in that** said linear accelerometer is mounted within said device body such that one of said axes is normal to a front face (80) of the device.

10. The device claimed in any one of claims 1 to 9, **characterised in that** said position detection module (62) further includes a gesture recognition component for recognizing whether said orientation signal corresponds to a predefined physical movement of the device (10) and, if so, triggering a change between said operating modes.

11. A method of changing operating mode for a handheld device (10), the method comprising the steps of:
operating the device (10) for wireless communication in a first operating mode;
sensing a physical orientation of the device (10); and
switching the device (10) to a second operating mode in response to said physical orientation.

12. The method claimed in claim 11, **characterised in that** the handheld device (10) includes an orientation sensor (64), and wherein said step of sensing includes reading data from said orientation sensor (64).

13. The method claimed in claim 12, **characterised in that** said step of sensing further includes determining whether said data indicates a change in the physical orientation of the handheld device (10), and wherein said step of switching occurs in response to said determination that said change in physical orientation has occurred.

14. The method claimed in claim 13, **characterised in that** said change in physical orientation includes a change from a first position associated with said first operating mode to a second position associated with said second operating mode.

15. The method claimed in claim 14, **characterised in that** the handheld device (10) includes a front face (80) and wherein said first position includes an orientation wherein said front face (80) is generally parallel relative to the ground, and wherein said second position includes an orientation wherein said front face (80) is generally perpendicular relative to the ground.

16. The method claimed in any one of claims 11 to 15, **characterised in that** said orientation sensor (64) comprises an orientation device (66) comprising any one or a combination of an accelerometer, a gyroscope, and/or a tilt sensor.

17. The method claimed in any one of claims 11 to 16, **characterised in that** the handheld device (10) includes a voice communication application (60) and wherein said first operating mode comprises a speakerphone mode and said second operating mode comprises a handset mode.

18. The method claimed in claim 17 when dependent on claim 15, **characterised in that** said speakerphone mode is associated with said first position in which said front face (80) is generally flat relative to the ground, and wherein said handset mode is associated with said second poisition in which said front face (80) is generally perpendicular to the ground.

19. The method claimed in any one of claims 11 to 18, **characterised in that** said orientation sensor (64) comprises a linear accelerometer sensing acceleration along at least two axes, and wherein said step of sensing includes detecting a change in orientation based upon the forces of acceleration sensed along said at least two axes.

20. The method claimed in claim 19, **characterised in that** said linear accelerometer is mounted within the device (10) such that one of said axes is normal to a front face (80) of the device (10).

21. A computer program product for changing an operating mode of a handheld device (10), the computer program product comprising a computer readable medium (24) embodying program code means (58) executable by a processor (38) of the handheld device (10) for implementing the method of any one of claims 11 to 20.

22. A wireless communication system comprising a plurality of handheld devices (10) according to any one of claims 1 to 10.
